# EUROPEAN PATENT APPLICATION

(11) **EP 1 826 055 A1**
(43) Date of publication of application: **29.08.2007**
(21) Application number: 07103022.5
(22) Date of filing: 26.02.2007
(51) Int. Cl.: B60K 28/16, B60K 23/08, B60K 31/00, B60T 8/1766, B60T 8/1769

(54) **Vehicle driving force control**

(30) Priority: 28.02.2006 JP 2006052523; 16.02.2007 JP 2007036350
(71) Applicant: Nissan Motor Company Limited, Kanagawa-ku Yokohama-shi, Kanagawa 221-0023 (JP)
(72) Inventor: Fukuda, Yoshiyuki, Atsugi-shi Kanagawa 243-0192 (JP); Ando, Masamichi, Atsugi-shi Kanagawa 243-0192 (JP)
(74) Representative: Holmes, Matthew William

(57) **Abstract**

A driving force control apparatus is configured to automatically apply a braking force to a plurality of wheels (5,10) in order to descend down a hill at a constant speed, such that the wheels (5,10) can be prevented from being locked by the braking force, and the vehicle speed can be prevented from increasing. In order for a vehicle to travel at a preset speed, the vehicle driving force control apparatus detects the speeds of the wheels (5,10) subjected to a braking force, and switches the vehicle from a four-wheel drive (4WD) mode in which driving force is distributed to all of the wheels (5,10) to a two-wheel drive (2WD) mode in which driving force is distributed to only the front wheels (5). The switch is made when the vehicle speed is equal to or less than a lower limit threshold. The front wheels are prevented from locking, and increases in the vehicle speed are suppressed.

## Description

The present invention generally relates to vehicle driving force control and particularly, but not exclusively, to a driving force control apparatus for use in a vehicle and arranged to vary the drive/braking force to the wheels to decelerate the vehicle until a preset constant speed is reached and to prevent the wheels from locking up when the vehicle is descending down a hill or the like. Aspects of the invention relate to an apparatus, to a method and to a vehicle.

In the past, it has been proposed that vehicles be equipped with an HDC function (Hill Descent Control) that enables the vehicle to slowly descend a slippery, steep slope regardless of the skill of the driver. The purpose of an HDC function is to control the vehicle so that when the vehicle is descending down a hill or the like, a braking force is automatically applied to decelerate the vehicle until a preset constant speed is reached.

When the vehicle is decelerated in order to maintain a constant speed, the wheels sometimes lock when braking force is applied. Thus, the vehicle may behave in an unstable manner while the wheels are locked if the vehicle is descending down a steep slope. In view of this, a technique has been proposed in U.S. Patent No. 5,941,614 has whereby the braking force on the locked wheels is released in cases in which it is detected that the wheels have locked.

It has been discovered that when a braking force applied to locked wheels is released, sometimes the total braking force acting on the vehicle is reduced, and the vehicle speed increases.

It is an aim of the invention to address this issue and to improve upon known technology. Embodiments of the invention may provide a driving force control apparatus which can prevent the vehicle speed from increasing when the wheels are released from being locked. Other aims and advantages of the invention will become apparent from the following description, claims and drawings.

Aspects of the invention therefore provide an apparatus, a method and a vehicle as claimed in the appended claims.

According to another aspect of the invention there is provided a driving force control apparatus comprising a driving force distribution control unit configured to distribute a driving force to a plurality of wheels of a vehicle based on a preset distribution ratio, a wheel speed detection unit configured and arranged to detect a rotational speed of at least one of the wheels, a vehicle speed detection unit configured and arranged to detect a traveling speed of the vehicle, a braking force control unit configured to apply a braking force to at least one of the wheels when the traveling speed that was detected exceeds a preset traveling speed and a distribution ratio changing unit configured to change from the preset distribution ratio to an adjusted distribution ratio which increases the driving force of the wheels being braked by the braking force control unit that have reached or fallen below a preset minimum rotational speed threshold.

In an embodiment, the distribution ratio changing unit is further configured to return to the preset distribution ratio when the wheels that were detected to have reached or fallen below the preset minimum rotational speed threshold are detected by the wheel speed detection unit to have increased to at least a preset maximum rotational speed threshold.

In an embodiment, the distribution ratio changing unit is further configured to change the preset distribution ratio to increase the driving force of the wheels until either the rotational speed of the wheels being braked by the braking force control unit no longer decreases, or the wheel speed detection unit has detected an increase in the rotational speed of the wheels being braked by the braking force control unit.

The apparatus may comprise a driving force distribution control unit configured to distribute a driving force between a pair of front wheels and a pair of rear wheels of a vehicle based on a preset distribution ratio, a wheel speed detection unit configured and arranged to detect a rotational speed of at least one of the front and rear wheels, a vehicle speed detection unit configured and arranged to detect a traveling speed of the vehicle, a braking force control unit configured to apply a braking force to at least one of the front and rear wheels when the traveling speed that was detected exceeds a preset traveling speed and a distribution ratio changing unit configured to switch from a four-wheel drive mode in which driving force is distributed to the front and rear wheels to a two-wheel drive mode in which the driving force is distributed to one of the pair of the front and rear wheels when the wheel speed detection unit has detected that the wheels being braked by the braking force control unit have reached or fallen below a preset minimum rotational speed threshold.

In an embodiment, the distribution ratio changing unit is further configured to return to the four-wheel drive mode from the two-wheel drive mode in which the driving force is distributed to one of the pair of the front and rear wheels, when the wheels that were detected to have reached or fallen below the preset minimum rotational speed threshold are detected by the wheel speed detection unit to have increased to at least a preset maximum rotational speed threshold.

In an embodiment, the braking force control unit is further configured to cause the braking force applied to the wheels to decrease when switching from the four-wheel drive mode to the two-wheel drive mode in which the driving force is distributed to one of the pair of the front and rear wheels, and when the wheel speed detection unit has detected a wheel speed indicative of a locking situation in the wheels to which the driving force will no longer distributed.

The apparatus may comprise a friction coefficient estimation unit configured to estimate a road friction coefficient of a road on which the vehicle is traveling and a threshold rotational speed setting unit configured to set a maximum rotational speed threshold and a minimum rotational speed threshold, with the maximum and minimum rotational speed thresholds being set to higher values when the friction coefficient estimated by the friction coefficient estimation unit is less than a preset friction coefficient than when the friction coefficient estimated by the friction coefficient estimation unit is equal to or greater than the preset friction coefficient.

In an embodiment, the wheels supplied with the driving force are main drive wheels and the wheels not supplied with the driving force are auxiliary driving wheels when the distribution ratio changing unit switches from the four-wheel drive mode to the two-wheel drive mode in which the driving force is distributed to one of the pair of the front and rear wheels, the distribution ratio changing unit is further configured to distribute the driving force to only the main drive wheels when the rotational speed of the auxiliary drive wheels being braked have reached or fallen below the minimum rotational speed and the distribution ratio changing unit is further configured to change the preset distribution ratio to increase the driving force of the main drive wheels until either the rotational speed of the main drive wheels no longer decreases or the wheel speed detection unit senses an increase in the rotational speed of the main drive wheels, when the rotational speed of the main drive wheels being braked have reached or fallen below the minimum rotational speed.

According to a further aspect of the invention there is provided a driving force control method comprising distributing a driving force to a plurality of wheels of a vehicle based on a preset distribution ratio, detecting a rotational speed of at least one of the wheels, detecting a traveling speed of the vehicle, applying a braking force to at least one of the wheels when the traveling speed that was detected exceeds a preset traveling speed and increasing an applied distribution ratio of the driving force of the wheels to a level above the preset distribution ratio when detecting that the wheels being braked have reached or fallen below a preset minimum rotational speed threshold.

According to yet another aspect of the invention there is provided a driving force control apparatus comprising a driving force distribution control means for distributing a driving force to a plurality of wheels of a vehicle based on a preset distribution ratio, wheel speed detection means for detecting a rotational speed of at least one of the wheels, vehicle speed detection means for detecting a traveling speed of the vehicle, braking force control means for applying a braking force to at least one of the wheels when the traveling speed that was detected exceeds a preset traveling speed and distribution ratio changing means for changing from the preset distribution ratio to an adjusted distribution ratio which increases the driving force of the wheels being braked that have reached or fallen below a preset minimum rotational speed threshold.

For example, a driving force control apparatus according to the present invention may comprise a driving force distribution control unit, a wheel speed detection unit, a vehicle speed detection unit, a braking force control unit, and a distribution ratio changing unit. The driving force distribution control unit is configured to distribute a driving force to a plurality of wheels of a vehicle based on a preset distribution ratio. The wheel speed detection unit is configured and arranged to detect a rotational speed of at least one of the wheels. The vehicle speed detection unit is configured and arranged to detect a traveling speed of the vehicle. The braking force control unit is configured to apply a braking force to at least one of the wheels when the traveling speed that was detected exceeds a preset traveling speed. The distribution ratio changing unit is configured to change from the preset distribution ratio to an adjusted distribution ratio which increases the driving force of the wheels being braked by the braking force control unit that have reached or fallen below a preset minimum rotational speed threshold.

Within the scope of this application it is envisaged that the various aspect, embodiments, examples, features and alternatives set out in the preceding paragraphs, in the claims and/or in the following description may be taken individually or in any combination thereof.

The present invention will now be described, by way of example only, with reference to the accompanying drawings in which:
Figure 1 is a schematic block diagram of a four-wheel drive vehicle that is equipped with a driving force control apparatus in accordance with a first embodiment of the present invention;
Figure 2 is a time chart showing the control specifics of the driving force control apparatus in accordance with the first embodiment;
Figure 3 is a flowchart showing the process executed by the driving force control apparatus in accordance with the first embodiment; and
Figure 4 is a flowchart showing the process executed by the driving force control apparatus in accordance with a second embodiment.

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

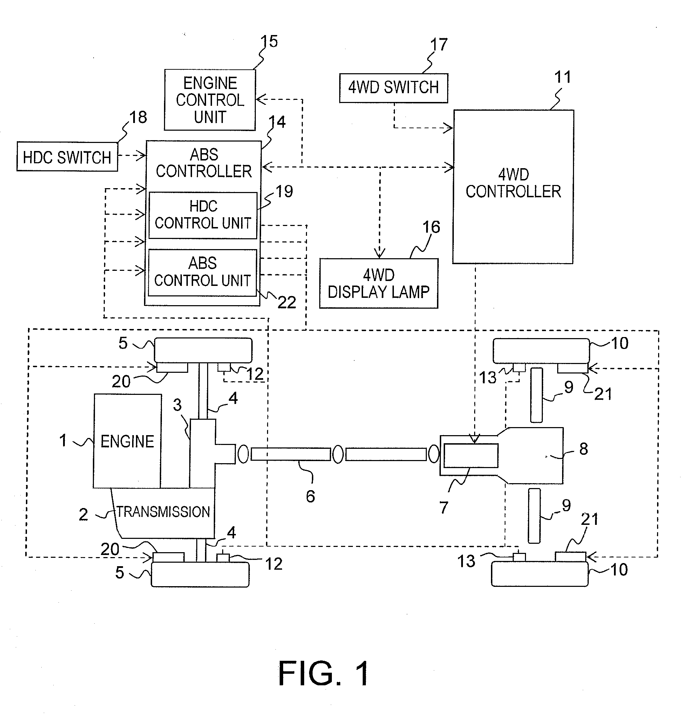

Referring initially to Figure 1, a schematic block diagram of a four-wheel drive vehicle is illustrated that is equipped with a driving force control apparatus in accordance with a first embodiment of the present invention. Basically, the drive system of the four-wheel drive vehicle includes, among other things, an engine 1, a transmission 2, a differential gear 3, a pair of front drive shafts 4, a pair of front (main drive) wheels 5, a propeller shaft 6, a coupling 7, a rear final drive 8, a pair of rear drive shafts 9 and a pair of rear (auxiliary drive) wheels 10. The engine 1 is disposed toward the front wheels 5. The drive force of the engine 1 is transmitted to the front wheels 5, which are the main drive wheels, via the transmission 2, the differential gear 3 and the front drive shafts 4. The drive force is also transmitted to the rear wheels 10, which are auxiliary drive wheels, via the transmission 2, the differential gear 3, the propeller shaft 6, the coupling 7, the rear final drive 8, and the rear drive shafts 9.

The driving force control apparatus in accordance with a first embodiment of the present invention, basically includes, among other things, a 4WD controller 11, a pair of front wheel speed sensors 12, a pair of rear wheel speed sensors 13, an ABS (Antilock Brake System) controller 14, an engine control unit 15, a 4WD display lamp 16, a 4WD switch 17, an HDC (Hill Descent Control) switch 18, an HDC control unit 19, a pair of front brake units 20 and a pair of rear brake units 21. The wheel speed sensors 12 and 13 constitute a wheel speed detection unit.

The 4WD controller 11 controls a drive force transfer strength of the coupling 7, whereby the driving force distribution ratio between the front and rear wheels 5 and 10 is varied. In this case, the driving force distributed to the rear wheels 10 is increased when the drive force transfer strength of the coupling 7 is increased, and the driving force distributed to the rear wheels 10 is reduced when the drive force transfer strength of the coupling 7 is reduced.

The front and rear wheels 5 and 10 are provided with the front wheel speed sensors 12 and the rear wheel speed sensors 13, respectively. The wheel speeds sensed by these sensors 12 and 13 are inputted to the ABS controller 14. In other words, the ABS controller 14 senses the speeds of the front and rear wheels 5 and 10 through signals from the front wheel speed sensors 12 and the rear wheel speed sensors 13. The vehicle speed, which is the speed at which the vehicle is traveling, is estimated based on the wheel speeds. Thus, the wheel speed sensors 12 and 13 and the ABS controller 14 constitute a vehicle speed detection unit. Furthermore, the ABS controller 14 controls braking force applied by the brake units 20 and 21, on the basis of the estimated vehicle speed and the sensed wheel speeds. Thus, the ABS controller 14 and brake units 20 and 21 constitute a braking force control unit. Alternatively, the ABS controller 14 by itself can be considered to constitute each of wheel speed detection unit, the vehicle speed detection unit and the braking force control unit, since the ABS controller 14 is programmed to receive signals from the sensors to determine the wheel speeds, the vehicle speed and the braking forces applied to the wheels. As explained below, the driving force control apparatus is configured to vary the distribution ratio of driving force. Thus, since the distribution ratio of driving force is varied and the distribution ratio of driving force on the wheels is increased in cases in which the rotational speed of the braking wheels slows to or below a preset minimum rotational speed. Thus, reductions in the rotational speed of the wheels can be suppressed, and the wheels can be prevented from locking. Also, in cases in which the wheels have locked, the rotational speed of the wheels can be increased, and the wheels can be released from being locked.

The ABS controller 14, the 4WD controller 11, the engine control unit 15 and a 4WD display lamp 16 are connected to each other via a controller area network (CAN). Furthermore, the 4WD switch 17 is connected to the 4WD controller 11. When the 4WD switch 17 is turned "on", the 4WD controller 11 controls the drive force transfer strength of the coupling 7 and controls the distribution ratio of the driving force in the front and rear wheels 5 and 10 on the basis of the detected speeds of the front and rear wheels 5 and 10 sent from the ABS controller 14. For example, if an acceleration slip is detected in the front wheels 5 from the difference in speeds between the front and rear wheels 5 and 10, then the drive force transfer strength of the coupling 7 is controlled such that the driving force distributed to the rear wheels 10 is controlled in accordance with the magnitude of the acceleration slip.

The HDC (Hill Descent Control) switch 18 operates an HDC control unit 19 that is operatively connected to the ABS controller 14. In the illustrated embodiment, the HDC control unit 19 is an integrated part of the ABS controller 14. When the HDC switch 18 is turned "on", the HDC control unit 19 controls the braking force applied by the brake units 20 and 21 so that the estimated vehicle speed coincides with a target vehicle speed set by the driver. In other words, if the estimated vehicle speed is greater than the target vehicle speed, the brake units 20 and 21 are automatically operated to reduce the vehicle speed, and if the estimated vehicle speed is less than the target vehicle speed, the brake units 20 and 21 cease to be automatically operated.

The HDC control unit 19 is also linked with an ABS control unit 22 of the ABS controller 14. When the braking force control implemented by the HDC control unit 19 causes any of the front wheels 5 or the rear wheels 10 to lock or for a situation to occur that is indicative of a locking situation, the ABS control unit 22 reduces the braking force on the wheels and implements control so as to release the wheels from being locked.

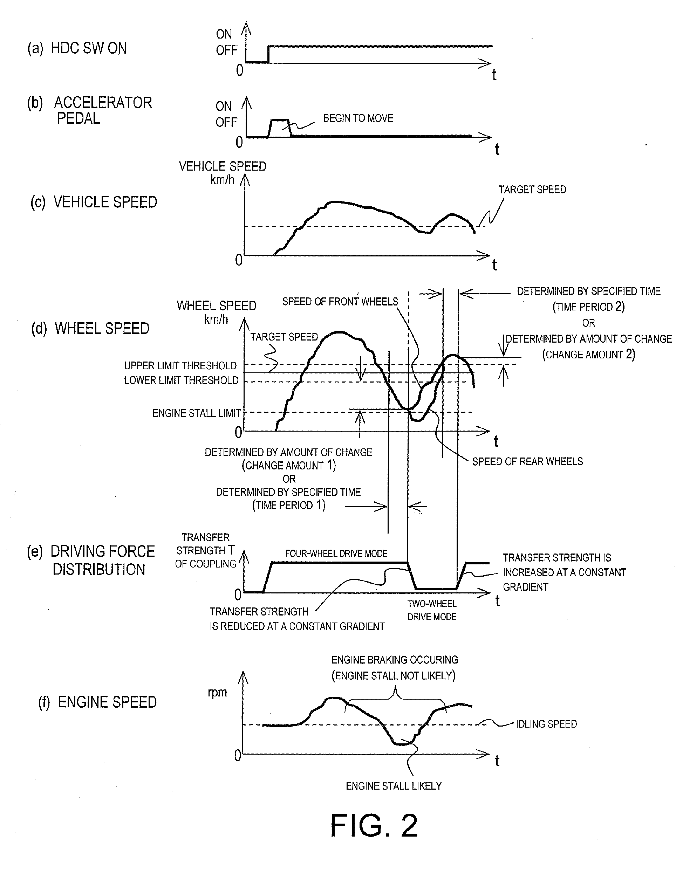

Figure 2 is a time chart showing the timing of the control process executed by the driving force control apparatus in accordance with the first embodiment of the present invention.

Before the vehicle descends down a steep slope, the HDC switch 18 is turned on in advance as shown in chart (a) of Figure 2. Next, the accelerator pedal is depressed, the vehicle moves to the peak of the slope, and the HDC control starts at the point where the accelerator pedal is released, as shown in chart (b) of Figure 2.

At this time, the 4WD controller 11 brings the vehicle in four-wheel drive (4WD) mode and distributes the driving force from the engine 1 at a preset distribution ratio (for example, 50% to the front wheels 5 and 50% to the rear wheels 10). Furthermore, the ABS controller 14 performs the HDC control so that the vehicle reaches the target speed (5 to 10 km/h, for example) as shown in chart (c) of Figure 2. When the vehicle descends down a hill while the HDC control is "on", the engine 1 does not generate a significant driving force because the target vehicle speed is low, the engine 1 is rotated by the front and rear wheels 5 and 10, and engine braking takes effect. Under these conditions, the 4WD controller 11 distributes the engine braking force at a preset distribution ratio.

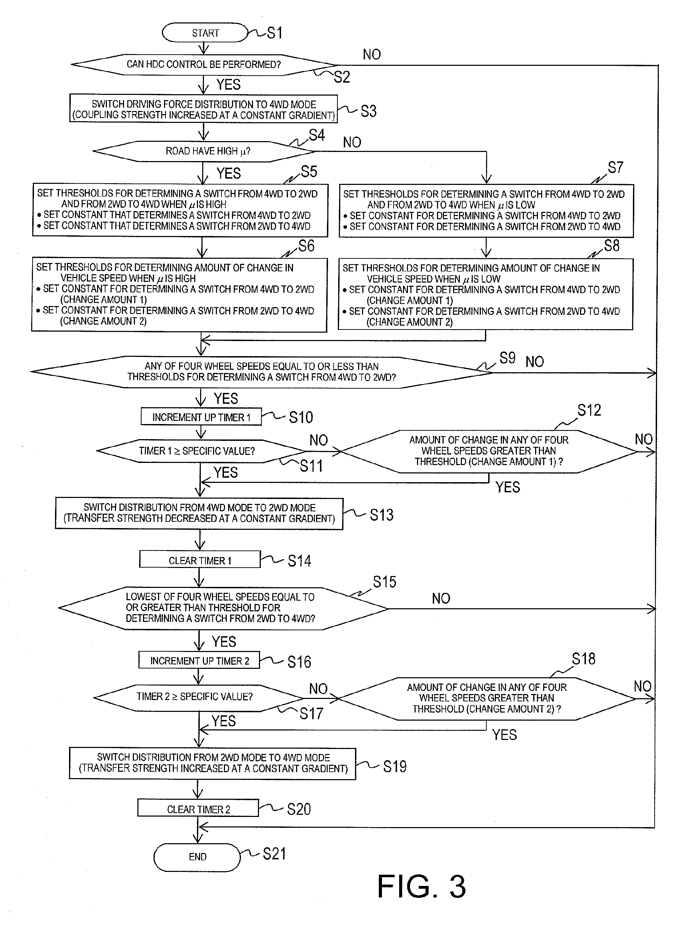

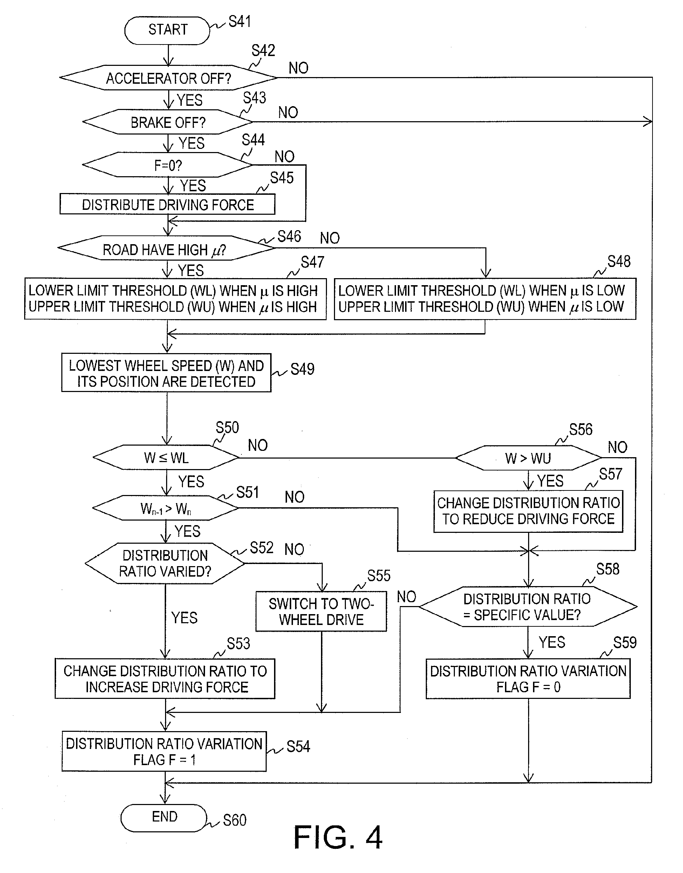

In many cases, the vehicle speed sometimes cannot be maintained at the target speed when the vehicle is descending down a steep slope even when the braking force is applied by engine braking to the front and rear wheels 5 and 10. In such cases, the HDC control unit 19 provided to the ABS control unit 22 sends out an instruction to generate a braking force. This instruction causes the ABS control unit 22 to automatically operate the brake units 20 and 21 that are provided to the front and rear wheels 5 and 10, such that the vehicle speed is maintained at the target speed. In addition to the automatic braking control of the brake units 20 and 21, the HDC control unit 19 also changes the driving force distribution among the front and rear wheels 5 and 10 as shown in the flow chart of either Figure 3 or Figure 4.

The 4WD controller 11 releases the coupling 7 to mechanically separate the engine 1 from the rear wheels 10, when the time (e.g., time period 1 in chart (d) of Figure 2) taken by the front wheel speed to fall below a lower limit threshold of the wheel speed, based on the target vehicle speed, exceeds a specific value due to changes in the friction coefficient µ of the road or other factors. The time (time period 1) is measured by the 4WD controller 11 using a timer 1 as indicated in the flow chart of Figure 3. Likewise, the 4WD controller 11 releases the coupling 7 to mechanically separate the engine 1 from the rear wheels 10, when the amount of change (e.g., change amount 1 in chart (d) of Figure 2) by which the front wheel speed falls below the lower limit threshold of the wheel speed exceeds a specified amount due to changes in the friction coefficient µ of the road or other factors. Thus, the vehicle is thereby switched to a two-wheel drive (2WD) mode from the four-wheel drive (4WD) mode.

As a result, the force exerted by the road on the front wheels 5 is reduced when the friction coefficient µ of the road is reduced. Thus, the entire driving force of the engine 1 is then distributed to the front wheels 5 because the vehicle is switched to two-wheel drive (2WD) mode when the rotating force of the front wheels 5 falls below the braking force of the brakes 20 and the speed of the front wheels 5 is reduced. Thus, the driving force of the front wheels 5 is increased to prevent the braking force of the brakes 20 from locking the front wheels 5.

Also, the front wheels 5 of the vehicle are prevented from locking without increasing the output of the engine 1 or reducing the braking force of the brakes 20. This is achieved merely by changing the distribution ratio between the front and rear wheels 5 and 10. Therefore, it is possible to suppress increases in the vehicle speed more efficiently than in cases of increasing the output of the engine 1 to prevent the front wheels 5 from locking, or in cases of reducing the braking force of the brakes 20 to prevent the front wheels 5 from locking.

Furthermore, it is possible that the rotation of the engine 1 will be reduced and that the engine 1 will stall if the front wheels 5 lock in cases in which the transmission 2 is a manual transmission. To prepare for this possibility, in the present embodiment, the state of the front wheels 5 is sensed from the wheel speed or the amount of change in the wheel speed, and then the speed of the front wheels 5 can be increased before the front wheels 5 lock. It is thereby possible to prevent engine stalls. In this case, the engine braking force is no longer distributed to the rear wheels 10 which have been mechanically separated from the engine 1. In particular, if the friction coefficient µ of the road then decreases while the brakes 21 are operating, the rear wheels 10 tend to lock more easily than they would if the driving force were distributed. However, since the rear wheels 10 are mechanically separated from the engine 1 at this time, the engine 1 does not stall even when the rear wheels 10 lock.

When the ABS controller 14 detects, based on signals from the rear wheel speed sensors 13, that the rear wheels 10 have locked, the ABS controller 14 sends out a command to reduce the braking force on the rear wheels 10, and releases the rear wheels 10 from being locked. The vehicle travels in a more stable manner when the rear wheels 10 are thus released from being locked.

After the 4WD controller 11 has prevented an engine stall by switching the vehicle from four-wheel drive (4WD) mode to two-wheel drive (2WD) mode and increasing the drive force on the front wheels 5, the vehicle is switched back to four-wheel drive (4WD) mode from two-wheel drive (2WD) mode. In particular, the 4WD controller 11 switches back to four-wheel drive (4WD) mode from two-wheel drive (2WD) mode when the time (e.g., time period 2 in chart (d) of Figure 2) taken by the speed of the front wheels 5 to exceed an upper limit threshold determined from the target vehicle speed exceeds a specific value. The time (time period 2) is measured by the 4WD controller 11 using a timer 2 as indicated in the flow chart of Figure 3. Likewise, the 4WD controller 11 switches back to four-wheel drive (4WD) mode from two-wheel drive (2WD) mode when the amount of change (e.g., change amount 2 in chart (d) of Figure 2) by which the wheel speed exceeds the upper limit threshold exceeds a specified amount.

As a result, the coupling 7 engages so that the rear wheels 10 are mechanically coupled with the engine 1 when the speed of the front wheels 5 exceeds the upper limit threshold. Therefore, engine braking with both the front and rear wheels 5 and 10 can be used for HDC control, as shown in chart (f) of Figure 2.

Of course, the lower limit threshold of the wheel speed is set to be higher than the threshold limit for engine stalls. The purpose of subtracting a specific value from the target vehicle speed to calculate the lower limit threshold, adding a specific value to calculate the upper limit threshold, and ensuring that the upper limit threshold is higher than the lower limit threshold is to inhibit hunting that occurs when the vehicle is switched to two-wheel drive (2WD) mode from four-wheel drive (4WD) mode, or to four-wheel drive (4WD) mode from two-wheel drive (2WD) mode.

Furthermore, when the vehicle is switched to two-wheel drive (2WD) mode from four-wheel drive (4WD) mode, or to four-wheel drive (4WD) mode from two-wheel drive (2WD) mode, the drive force transfer strength of the coupling 7 varies with a constant gradient, as shown in chart (e) of Figure 2. The following matters are taken into consideration when setting this constant gradient.

First, if the vehicle is switched from four-wheel drive (4WD) mode to two-wheel drive (2WD) mode, releasing the coupling 7 produces shocks and loud noises, the driving force of the rear wheels 10, which are auxiliary driving wheels, is suddenly reduced such that the rotational speed of the rear wheels 10 is reduced, and the behavior of the vehicle is disrupted. If the vehicle is slowly switched from four-wheel drive (4WD) mode to two-wheel drive (2WD) mode, engine stalls cannot be avoided. In view of this, the drive force transfer strength T of the coupling 7 is reduced with a constant gradient, rather than rapidly or slowly, so as to avoid these problems.

Next, in cases in which locking has been successfully prevented, rapidly switching the vehicle from two-wheel drive (2WD) mode to four-wheel drive (4WD) mode will likely allow the vehicle to behave in a stable manner because the braking force of engine braking is rapidly applied to the four wheels with a suitable distribution ratio. If the braking force from engine braking is suddenly distributed to the four wheels, then it is possible for the vehicle to become unstable from sudden fluctuations in the braking force on the front and rear wheels 5 and 10. If the vehicle is slowly switched from two-wheel drive (2WD) mode to four-wheel drive (4WD) mode, then the braking force applied by engine braking to the rear wheels 10 slowly increases, leading to a problem in that time is required to return to a suitable distribution ratio. These merits, concerns, and problems are taken into consideration when a constantly increasing gradient is set.

The upper limit threshold and the lower limit threshold are set to higher values when the friction coefficient µ of the road is determined to be low than when the friction coefficient µ of the road is high. When the friction coefficient µ of the road is low, the drop in the speeds of the front and rear wheels 5 and 10 is greater than when the friction coefficient µ of the road is high, and the wheels are likely to lock causing the engine 1 to stall. Setting the upper limit threshold and the lower limit threshold to higher values makes it possible to prevent the engine 1 from stalling by more quickly starting the switching of the driving force distribution from four-wheel drive (4WD) mode to two-wheel drive (2WD) mode before the engine 1 stalls.

One example of a method for determining the friction coefficient µ of a road is to determine that the friction coefficient µ of the road is low when the speeds of the front and rear wheels 5 and 10 differ by a specified amount or more for a specified amount of time. Another method is to determine that the friction coefficient µ of the road is low when the speeds of the four wheels are different from the vehicle speed. The friction coefficient µ of the road can also be determined to be low when a TBS (Traction Control System) function (e.g., a function for preventing idling) or an ABS function (Antilock Brake System) is in effect. Furthermore, the friction coefficient µ of the road can be determined to be low when wipers are being operated for improving visibility in cases in which the vehicle is traveling during rain or snow.

Figure 3 is a flowchart showing the control specifics of the driving force distribution control apparatus of the first embodiment. This flowchart is repeated at specific intervals when the HDC switch is "on".

The system starts in step S1. In step S2, a determination is made, based on the driver's operation of the accelerator pedal and the brake pedal, as to whether the HDC control can be performed. If the driver is not operating the accelerator pedal or the brake pedal, then the HDC control is determined to be possible and the process then advances to step S3. If the driver is operating the accelerator pedal or the brake pedal, then the HDC control is determined to not be possible, and the process advances to step S21 and the control process ends. In step S3, the drive force transfer strength of the coupling 7 is increased at a constant gradient so that the driving force reaches a preset distribution ratio to obtain a four-wheel drive mode, and the process advances to step S4.

In step S4, a determination is made as to whether the friction coefficient µ of the road is either high or low. The process advances to step S5 if it is high and to step S7 if it is low. In step S5, when the friction coefficient µ of the road is high, a lower limit threshold is set for determining that the vehicle will be switched from four-wheel drive (4WD) mode (denoted by 4WD in Figure 3) to two-wheel drive (2WD) mode (denoted by 2WD in Figure 3). An upper limit threshold is also set for determining when the vehicle will be switched from two-wheel drive (2WD) mode to four-wheel drive (4WD) mode. The process then advances to step S6.

In step S6, when the friction coefficient µ of the road is high, a threshold is set for the change amount 1 by which the vehicle speed falls below the lower limit threshold, and a threshold is set for the change amount 2 by which the vehicle speed exceeds the upper limit threshold.

In step S7, when the friction coefficient µ of the road is low, a lower limit threshold is set for determining that the vehicle will be switched from four-wheel drive (4WD) mode to two-wheel drive (2WD) mode, and an upper limit threshold is set for determining that the vehicle will be switched from two-wheel drive (2WD) mode to four-wheel drive (4WD) mode. The process then advances to step S8.

In step S8, when the friction coefficient µ of the road is low, a threshold is set for the change amount 1 by which the vehicle speed falls below the lower limit threshold, and a threshold is set for the change amount 2 by which the vehicle speed exceeds the upper limit threshold.

After the thresholds are set when the friction coefficient µ of the road is either high (step S6) or low (step 8), the process advances to step S9.

In step S9, a determination is made as to whether any of the speeds of the four wheels are equal to or less than the lower limit threshold; i.e., the threshold for determining that the vehicle will be switched from four-wheel drive (4WD) mode to two-wheel drive (2WD) mode. In step S10, the timer 1 is incremented up to measure the time (time period 1) during which any of the wheel speeds falls below the lower limit threshold.

Next, in step S11, if the time (time period 1) measured by the timer 1 is equal to or greater than a specific value, then the process advances to step S13, where the driving force distribution is switched from four-wheel drive (4WD) mode to two-wheel drive. If the time (time period 1) measured by the timer 1 is less than the specific value, then the process advances to step S12.

In step S12, a determination is made as to whether or not the amount of change by which any of the four wheel speeds falls below the lower limit threshold of the wheel speed is equal to or greater than the threshold (e.g., change amount 1 in Figure 2). If the amount of change is equal to or greater than this threshold (i.e., the amount of change is high), then the process advances to step S13. However, if the amount of change is less than this threshold (i.e., the amount of change is low), the process advances to step S21 and the control ends.

In step S13, the drive force transfer strength of the coupling 7 is decreased at a constant gradient so that the driving force reaches to obtain a two-wheel drive mode, and the process advances to step S14.

Next, in step S14, the timer 1 is cleared (e.g., set to zero) and the process advances to step S15.

In step S15, a determination is made as to whether or not the lowest of the four wheel speeds is equal to or greater than the upper limit threshold. In other words, a determination is made as to whether or not the vehicle should be switched from two-wheel drive (2WD) mode to four-wheel drive (4WD) mode. In cases in which the lowest wheel speed is determined to be equal to or greater than the upper limit threshold, the process advances to step S16. In step S16, the timer 2 is incremented up to measure the time (time period 2) during which the lowest wheel speed exceeds the upper limit threshold. In cases in which the lowest wheel speed is less than the upper limit threshold, the process advances to step S21 and the control ends.

Next, in step S17, a determination is made as to whether the time (time period 2) measured by the timer 2 is equal to or greater than a specific value. If this determination is positive, then the process advances to step S19. In step S19, the drive force transfer strength of the coupling 7 is increased at a constant gradient in order to switch the driving force distribution from two-wheel drive to four-wheel drive (4WD) mode. If the time (time period 2) measured by the timer 2 is less than the specific value, then the process advances to step S18.

In step S18, a determination is made as to whether or not the amount of change in the lowest of the four wheel speeds is equal to or greater than the threshold (e.g., change amount 2 in Figure 2). If the amount of change is equal to or greater than this threshold (i.e., the amount of change is high), then the process advances to step S19. In step S19, the drive force transfer strength of the coupling 7 is increased at a constant gradient in order to switch the driving force distribution from two-wheel drive to four-wheel drive (4WD) mode. However, if the amount of change is less than this threshold (i.e., the amount of change is low), the process advances to step S21 and the control ends.

Figure 4 is a flowchart showing the control process executed by the ABS controller 14 of the driving force distribution control apparatus in accordance with the second embodiment of the present invention. This flowchart is repeated at specific intervals when the HDC switch is "on".

The process starts in step S41. In step S42, the state of the accelerator as operated by the driver is detected, and if the acceleration pedal is not depressed (accelerator OFF), then the process advances to step S43. In step S43, the state of the brakes (e.g., the brake units 20 and 21) as operated by the driver is detected, and if the brake pedal is not depressed (brake OFF), then the process advances to step S44. However, if either the acceleration pedal or the brake pedal is being operated, then the process advances to step S60, and the control ends. Thus, steps S42 and S43 are equivalent to the step S2 of the first embodiment.

In step S44, a confirmation is made as to whether a distribution ratio variation flag (set in the following step S55) has been turned "on". If the distribution ratio variation flag has not been turned "on" (i.e., F = 0), then the process advances to step S45, and the drive force transfer strength of the coupling 7 is controlled so that the driving force of the front and rear wheels 5 and 10 reaches a specific preset distribution ratio (for example, 60:40). However, in step S44, if the variation flag is turned "on" (i.e., F = 1), then the driving force distribution is not controlled in step S45, but instead the previous driving force distribution is maintained, and the process advances to step S46.

In step S46, a determination is made as to whether the friction coefficient µ of the road is either high or low. The process advances to step S47 if the friction coefficient µ is high and to step S48 if the friction coefficient µ is low. In step S47, when the friction coefficient µ of the road is high, a lower limit threshold (WL) is set for determining that the vehicle will be switched from four-wheel drive (4WD) mode to two-wheel drive. Also in step S47, an upper limit threshold (WU) is also set for determining that the vehicle will be switched from two-wheel drive to four-wheel drive (4WD) mode. The process then advances to step S49.

In step S48, when the friction coefficient µ of the road is low, a lower limit threshold (WL) is set for determining that the vehicle will be switched from four-wheel drive (4WD) mode to two-wheel drive, and an upper limit threshold (WU) is set for determining that the vehicle will be switched from two-wheel drive to four-wheel drive (4WD) mode. The process then advances to step S49.

In step S49, the speeds of the front and rear wheels 5 and 10 supplied via the ABS controller 14 are detected, and thus, the lowest wheel speed (W) and its position (front wheels 5 or rear wheels 10) are detected. Then the process advances to step S50.

In step S50, a determination is made as to whether or not the lowest wheel speed (W) is equal to or less than the threshold (WL) for determining that the vehicle will be switched from four-wheel drive (4WD) mode to two-wheel drive (2WD) mode. If the lowest wheel speed (W) is equal to or less than the lower limit threshold (WL), the process advances to step S51.

Next, in step S51, the current value (Wn) of the lowest wheel speed is compared with the previous value (Wn - 1), and if the current value (Wn) is less than the previous value (Wn - 1), then the process advances to step S52. In step S52, a determination is made as to whether or not it is possible to change the distribution ratio so as to increase the driving force of the wheel having the lowest speed. If it is possible, the process advances to step S53, the distribution ratio is changed so as to increase the driving force by a preset amount, and the process then advances to step S54.

For example, in cases in which the driving force distribution ratio of the vehicle can be controlled from 100:0 (front wheels 5/rear wheels 10) to 50:50, and the distribution ratio between the front and rear wheels 5 and 10 is 60:40, as set in step S45, the distribution ratio can be changed so that the driving force increases on either the front wheels 5 or the rear wheels 10. Therefore, in this case, if the determination is positive in step S52, the process advances to step S53.

In step S54, a notification is received that the driving force distribution ratio has changed from the distribution ratio set in step S45, the distribution ratio variation flag is set to 1 (i.e., F = 1), and then the process advances to step S60. In step S60, the control returns to step S41, and this loop is repeated as long as the HDC switch is "on" such that the HDC control is to be conducted. Thus, the distribution ratio is changed in step S53 so as to increase the driving force on the wheels with the lowest wheel speed when the braking force or some other force has been applied causing the wheel speed to be equal to or less than the lower limit threshold (WL). Engine stall can thereby be prevented in cases in which the wheel speed is either increased or stopped from decreasing.

In step S51, if the current value (Wn) is equal to or greater than the previous value (Wn - 1), the process advances to step S58, which is described later. In this state, there is no need to change the distribution ratio to increase the driving force. In other words, the distribution ratio need only be varied to increase the driving force in cases in which the speed of the wheels subjected to braking force has neither increased nor stopped decreasing. It is thereby possible to prevent engine stalls resulting from reductions in wheel speed.

In step S52, the process advances to step S55 when it is determined that the distribution ratio cannot be changed so that the driving force of the wheel having the lowest speed is increased. Thus, in step S55, if the vehicle is in the four-wheel drive (4WD) mode, then a switch is made from the four-wheel drive (4WD) mode to the two-wheel drive mode. However, in step S55, if the vehicle is already in two-wheel drive mode, then the two-wheel drive mode is maintained. The process then advances to step S54, where the distribution ratio variation flag is set to 1 (i.e., F = 1), and then the process advances to step S60 such that the HDC control returns to the beginning.

For example, when the driving force distribution ratio of the vehicle can be controlled from 100:0 (front wheels 5/rear wheels 10) to 50:50, if the distribution ratio of the front and rear wheels 5 and 10 is at 50:50, and the rear wheels 10 have the lowest wheel speed, then the distribution ratio cannot be changed in step S52 so as to increase the driving force on the rear wheels 10. In this case, the vehicle is switched from four-wheel drive (4WD) mode to two-wheel drive, and the rear wheels 10 are mechanically separated from the engine 1, thus preventing the engine 1 from stalling due to a reduction in the speed of the rear wheels 10.

In step S50, when the lowest wheel speed (W) is determined to not be equal to or less than the lower limit threshold (WL), the process advances to step S56. In step S56, a determination is made as to whether or not the lowest wheel speed (W) exceeds an upper limit threshold (WU). In other words, in step S56, determination is made as to whether or not the vehicle will be switched from two-wheel drive (2WD) mode to four-wheel drive (4WD) mode. When the lowest wheel speed (W) is determined to exceed the upper limit threshold (WU), the process advances to step S57.

In step S57, the distribution ratio is changed so as to reduce the driving force proportionate to a preset amount, and the process advances to step S58. In step S58, a determination is made as to whether the changed distribution ratio of the wheels is equal to the preset driving force distribution ratio that was set in step S45. If so, the process advances to step S59. In step S59, a notification is received that the distribution ratio is the same as the driving force distribution ratio set in step S45, the distribution ratio variation flag is set to 0 (F = 0). Then, the process advances to step S60 where the control ends and then returns to the beginning of the control loop.

According to this system, the vehicle can be kept in four-wheel drive (4WD) mode while the driving force of the front wheels 5 is increased even when, e.g., the speed of the front wheels 5 is reduced. Thus, the front wheels 5 can be prevented from being locked by the braking force of the brake units 20. Therefore, when a decrease in wheel speed is detected, four-wheel drive (4WD) mode can be maintained for a longer duration and fluctuations in the driving force of the front and rear wheels 5 and 10 can be kept lower than in cases in which the vehicle is switched from four-wheel drive (4WD) mode to two-wheel drive (2WD) mode. The vehicle can therefore be made to behave in a more stable manner.

The vehicle driving force control apparatus of the present invention automatically applies braking force as necessary when the vehicle is descending down a hill or the like, and controls the engine braking force so that the vehicle reaches a preset constant speed. In such cases, the wheels subjected to this braking force can be prevented from locking, and the vehicle speed can be prevented from increasing.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. The term "detect" as used herein to describe an operation or function carried out by a component, a section, a device or the like includes a component, a section, a device or the like that does not require physical detection, but rather includes determining, measuring, modeling, predicting or computing or the like to carry out the operation or function. The term "configured" as used herein to describe a component, section or part of a device includes hardware and/or software that is constructed and/or programmed to carry out the desired function. Moreover, terms that are expressed as "means-plus function" in the claims should include any structure that can be utilized to carry out the function of that part of the present invention.

While only selected embodiments have been chosen to illustrate the present invention, it will be apparent to those skilled in the art from this disclosure that various changes and modifications can be made herein without departing from the scope of the invention as defined in the appended claims. For example, in the embodiments described above, a case was described in which the transmission was a manual transmission, but the present invention can also be applied to a case of an automatic transmission that has a torque converter, or to a continuously variable transmission. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

This application claims priority from Japanese Patent Application Nos. 2006-052523, filed 28th February 2006, and 2007-036350, filed 16th February 2007, the contents of which are expressly incorporated herein by reference.

## Claims

1. An apparatus comprising:
driving force distribution control means for distributing a driving force to a plurality of wheels of a vehicle based on a preset distribution ratio;
wheel speed detection means for detecting a rotational speed of at least one of the wheels;
vehicle speed detection means for detecting a traveling speed of the vehicle;
braking force control means for applying a braking force to at least one of the wheels when the traveling speed exceeds a preset traveling speed; and
distribution ratio changing means for changing from the preset distribution ratio to an adjusted distribution ratio which increases the driving force of the wheels being braked that have reached or fallen below a preset minimum rotational speed threshold.

2. An apparatus as claimed in claim 1 wherein the distribution ratio changing means is arranged to return to the preset distribution ratio when the wheels that were detected to have reached or fallen below the preset minimum rotational speed threshold are detected by the wheel speed detection means to have increased to at least a preset maximum rotational speed threshold.

3. An apparatus as claimed in any preceding claim wherein the distribution ratio changing means is arranged to change the preset distribution ratio to increase the driving force of the wheels until either the rotational speed of the wheels being braked by the braking force control means no longer decreases, or the wheel speed detection means has detected an increase in the rotational speed of the wheels being braked by the braking force control means.

4. An apparatus as claimed in any preceding claim wherein the driving force distribution control means is arranged to distribute a driving force between a pair of front wheels and a pair of rear wheels of the vehicle and wherein the distribution ratio changing means is arranged to switch from a four-wheel drive mode in which driving force is distributed to the front and rear wheels to a two-wheel drive mode in which the driving force is distributed to one of the pair of the front and rear wheels when the wheel speed detection means has detected that the wheels being braked by the braking force control means have reached or fallen below a preset minimum rotational speed threshold.

5. An apparatus as claimed in claim 4, wherein the distribution ratio changing means is arranged to return to the four-wheel drive mode from the two-wheel drive mode in which the driving force is distributed to one of the pair of the front and rear wheels, when the wheels that were detected to have reached or fallen below the preset minimum rotational speed threshold are detected by the wheel speed detection means to have increased to at least a preset maximum rotational speed threshold.

6. An apparatus as claimed in claim 4 or claim 5, wherein the braking force control means is arranged to cause the braking force applied to the wheels to decrease when switching from the four-wheel drive mode to the two-wheel drive mode in which the driving force is distributed to one of the pair of the front and rear wheels, and when the wheel speed detection means has detected a wheel speed indicative of a locking situation in the wheels to which the driving force will no longer distributed.

7. An apparatus as claimed in any preceding claim comprising:
friction coefficient estimation means for estimating a road friction coefficient of a road on which the vehicle is traveling; and
threshold rotational speed setting means for setting a maximum rotational speed threshold and a minimum rotational speed threshold, with the maximum and minimum rotational speed thresholds being set to higher values when the friction coefficient estimated by the friction coefficient estimation means is less than a preset friction coefficient than when the friction coefficient estimated by the friction coefficient estimation means is equal to or greater than the preset friction coefficient.

8. An apparatus as claimed in any of claims 4 to 7 wherein:
the wheels supplied with the driving force are main drive wheels and the wheels not supplied with the driving force are auxiliary driving wheels when the distribution ratio changing means switches from the four-wheel drive mode to the two-wheel drive mode in which the driving force is distributed to one of the pair of the front and rear wheels;
the distribution ratio changing means is arranged to distribute the driving force to only the main drive wheels when the rotational speed of the auxiliary drive wheels being braked have reached or fallen below the minimum rotational speed; and
the distribution ratio changing means is arranged to change the preset distribution ratio to increase the driving force of the main drive wheels until either the rotational speed of the main drive wheels no longer decreases or the wheel speed detection means senses an increase in the rotational speed of the main drive wheels, when the rotational speed of the main drive wheels being braked have reached or fallen below the minimum rotational speed.

9. A method comprising:
distributing a driving force to a plurality of wheels of a vehicle based on a preset distribution ratio;
detecting a rotational speed of at least one of the wheels;
detecting a traveling speed of the vehicle;
applying a braking force to at least one of the wheels when the traveling speed that was detected exceeds a preset traveling speed; and
increasing an applied distribution ratio of the driving force of the wheels to a level above the preset distribution ratio when detecting that the wheels being braked have reached or fallen below a preset minimum rotational speed threshold.

10. A vehicle having an apparatus or adapted to use a method as claimed in any preceding claim.
